Europäisches Patentamt

European Patent Office · 

Office européen des brevets

(19)

(11) Publication number: **0 192 281**
**B1**

(12) **EUROPEAN PATENT SPECIFICATION**

(45) Date of publication of patent specification: **26.07.89**

(51) Int. Cl.⁴: **B 23 B 27/04**

(21) Application number: **86200021.3**

(22) Date of filing: **08.01.86**

(54) Grooving tool.

(30) Priority: **11.01.85 NL 8500067**

(43) Date of publication of application:
**27.08.86 Bulletin 86/35**

(45) Publication of the grant of the patent:
**26.07.89 Bulletin 89/30**

(84) Designated Contracting States:
**AT BE CH DE FR GB IT LI LU NL SE** .

(56) References cited:
**DE-A-3 204 693**
**FR-A-2 394 351**
**US-A-4 332 513**

(73) Proprietor: **KOMEETSTAAL HOLDING B.V.**
**Industriestraat 1**
**NL-7005 AN Doetinchem (NL)**

(72) Inventor: **Smolders, Cornelis**
**Collenkamp 18**
**NL-6903 VP Zevenaar (NL)**

(74) Representative: **Klijberg, Josephus B.J. et al**
**Nederlandsch Octrooibureau Scheveningseweg**
**82 P.O. Box 29720**
**NL-2502 LS 's-Gravenhage (NL)**

## Description

The invention relates to a tool holder with a tool for metal cutting work, the features of the first part of claim 1.

Such a tool holder is known from US—A—4 332 513. With said known tool holder the support for the tool has a curved outer surface the length of which, seen in the axial direction of the carrier, is substantially equal to the length of the tool. This means that during insertion for the making of a cylindrical cavity or a cylindrical groove one can never go deeper than the distance which is determined by the distance between the cutting edge and the nearest front face of the support or of the clamp which support of the known tool holder comprises a rectangular block with holes for securing said block upon the carrier which block has a front face which limits the depth of cutting.

In this known tool holder the clamp is secured on top of the support and the support is secured against the side face of a recess of the carrier. To make this possible and give sufficient strength to the entire tool holder to avoid vibrations during the cutting operation the support for its greater part is formed by said rectangular block within which the holes are provided for the screws for securing said block against the carrier and for securing the clamp on top of the support.

At the front side said rectangular block has been provided with the axially short portion with the curved outer surface on top of which the tool has to be placed and held by means of the clamp. This construction, however, has as a consequence that the depth of operation is limited by the axial length of the curved portion and stops there where the rectangular block starts.

Purpose of the inventimn is to provide in a simple manner a tool holder with the aid of which the insertion depth can be increased with retaining a secure clamping and a structure of sufficient rigidity that vibrations do not effect the result of the cutting operation.

According to the invention this object is achieved in that the clamp is fastened to the carrier,

that the forwardly extending portion of the clamp is laterally displaced with respect to the bolt that holds the clamp upon the carrier,

that the curved outer surface of the support extends over the entire axial length of the support, and

that the clamp has over its entire axial length an outer side surface which is curved as a continuation of the curvature of the curved outer surface of the support.

The required strength is obtained in that clamp and support are individually secured to the carrier.

The invention will now be explained in greater detail with reference to the drawing.

Figure 1 shows a side view of a tool holder with tool according to the invention.

Figure 2 is a top view of Figure 1 and

Figure 3 is a front view of Figure 1.

Figure 4 shows the application of the tool holder on changing of the direction of rotation, with carrier, support and clamp, in a front view.

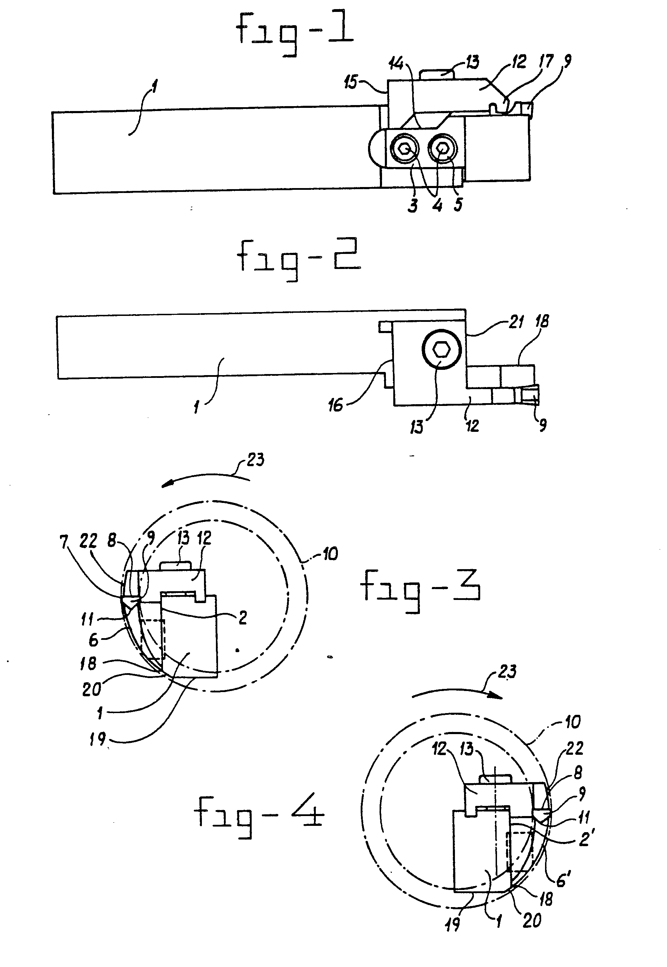

Figure 1 shows a carrier 1, against the right side of which—which is indicated by 2, and which forms the right side when one looks in the direction of the tool—a support 3 is fastened with bolts 4 and 5, said support having a curved outer surface 6, which is located on the inside of the outside edge 7 of the cutting edge 8 of the tool 9 and thus falls within the circle 10 which is described by the outer point 7 of the edge 8. This curved part 6 has a V-shaped support 11 for the tool 9, of the type known per se from US—A—4 332 513. This tool 9 is clamped in the V-shaped groove 11 by means of a clamp 12, which is clamped with the bolt 13 on the topface 14 of the carrier 1 with the rear side 15 of the clamp 12 lying against the stop side 16 of the carrier. This clamp 12 has a nose 17 with inverted V-shaped groove which grips the tool 9.

The side face 2 of the carrier 1, against which the support is fastened lies in a vertical plane which goes through the bottom edge 18 of the support 6.

The underside 19 of the carrier 1 is bevelled at 20, so that the carrier has not a single part which projects outside the circle 10, but always comes within it.

It can be seen clearly from looking at Figures 2 and 3 that on insertion the front face 21 does not limit the insertion depth and that insertion is possible over a great length which extends axially past the axial length of clamp and support.

For this, it is, of course, necessary that the side face 22 of the clamp 12 has a cylindrically curved outer surface which is a continuation of the curved cylindrically outer surface 6 of the support.

Figure 4 shows that on rotation of the workpiece clockwise, as indicated by the arrow 23, in contrast to rotation anticlockwise, as shown in Figure 3, the same working can be carried out with one and the same carrier 1, in which the support 6' is fastened against the opposite side face 2' of the carrier 1 in the same way as shown in the other figures with the curve the opposite way, while the clamp is also designed in reverse.

## Claim

Tool holder with a tool (9) for metal cutting work, comprising a carrier (1), a support (3) for the tool (9) secured against a vertical side face (2) at the end of the carrier (1) by means of bolts (4, 5), which extend perpendicular to said side face with their heads turned outwardly, a clamp (12) which engages the top surface of the tool (9) and is fastened detachably by means of a vertical bolt (13), and a tool (9) which can be clamped between the V-shaped top surface (11) of a curved forwardly extending portion of the support (3) and a forwardly extending portion of the clamp (12) with the rearside of the clamp (12) against a stop face (16), said tool (9) having a cutting edge (8) which extends in a direction perpendicular to the longitudinal axis of the carrier (1) with a length such that said cutting edge (8) projects in the said perpendicular direction beyond the sides of the forwardly extending portions of clamp (12) and support (3), the said forwardly extending curved portion of the support having its curved outer surface (6) extending in the axial direction of the carrier (1) over a length which is at least equal to the axial length of the tool (9), said curved outer surface (6) having a center line lying in a plane through the cutting edge (8) and parallel to the longitudinal axis of the carrier (1), whilst the side face of the carrier (1) against which the support has been secured lies in a vertical plane through or inwards of the lower edge (18) of the curved outer surface (6) of the support (3) with the underside (19, 20) of the carrier inside the cylindrical plane defined by the curved outer surface (6) of the support (3), characterized in that the clamp (12) is fastened to the carrier (1), that the forwardly extending portion of the clamp (12) is laterally displaced with respect to the bolt (13) that holds the clamp upon the carrier, that the curved outer surface (6) of the support (3) extends over the entire axial length of the support (3), and that the clamp (12) has over its entire axial length an outer side surface (22) which is curved as a continuation of the curvature of the curved outer surface (6) of the support (3).

**Patentanspruch**

Werkzeughalter mit einem Metallschneidewerkzeug (9), mit einem Träger (1), einer Aufnahme (3) für das Werkzeug (9), die gegen eine vertikale Seitenfläche (2) am Ende des Trägers (1) mittels Schrauben (4, 5) festgelegt ist, die rechtwinkelig zu der Seitenfläche verlaufen, wobei ihre Köpfe nach aussen weisen, einer Klemme (12), die mit der nach oben weisenden Fläche des Werkzeugs (9) in Eingriff steht und die lösbar mittels einer vertikalen Schraube (13) befestigt ist, und mit einem Werkzeug (9), das zwischen der V-förmigen nach oben weisenden Fläche (11) eines gekrümmten, nach vorne ragenden Bereichs der Aufnahme (3) und einem nach vorne ragenden Bereich der Klemme (12) festgeklemmt werden kann, wobei die Rückseite der Klemme (12) gegen eine Anschlagfläche (16) anliegt, wobei das Werkzeug (9) eine Schneidkante (8) aufweist, die rechtwinkelig zur Längsachse des Trägers (1) verläuft und die so lang ist, daß die Schneidkante (8) in diesem rechten Winkel über die Seiten der nach vorne ragenden Bereiche der Klemme (12) und der Aufnahme (3) übersteht, wobei der nach vorne gekrümmte Bereich der Aufnahme seine gekrümmte äußere Fläche (6), die sich in axialer Richtung des Trägers (1) über eine Länge erstreckt, die mindestens so groß wie die axiale Länge des Werkzeugs (9) ist, hat, und wobei die gekrümmte äußere Fläche (6) eine Mittellinie hat, die in einer Ebene durch die Schneidkante (8) liegt und die parallel zur Längsrichtung des Trägers (1) verläuft, während die Seitenfläche des Trägers (1), gegen die die Aufnahme festgelegt ist, in einer vertikalen Ebene durch oder innerhalb der unteren Kante (18) der gekrümmten äußeren Fläche (6) der Aufnahme (3) liegt, wobei die Unterseite (19, 20) des Trägers innerhalb der zylindrischen Fläche liegt, die durch die gekrümmte äußere Fläche (6) der Aufnahme (3) bestimmt wird, dadurch gekennzeichnet, daß die Klemme (12) an dem Träger (1) festgelegt ist, daß der nach vorne ragende Bereich der Klemme (12) bezüglich der Schraube (13), die die Klemme an dem Träger hält, lateral versetzt ist, daß sich die gekrümmte äußere Fläche (6) der Aufnahme (3) über die gesamte axiale Länge der Aufnahme (3) erstreckt und daß die Klemme (12) über ihre gesamte axiale Länge eine äußere Seitenfläche (22) aufweist, die als Fortsetzung der Krümmung der gekrümmten äußeren Fläche (6) der Aufnahme (3) gekrümmt ist.

**Revendication**

Porte-outil portant un outil (9), pour la saignée de métaux, qui comporte un support (1), un appui (3) pour l'outil (9), fixé contre une face latérale verticale (2) de l'extrémité du support (1) à l'aide de boulons (4, 5) qui suivent une direction perpendiculaire à la face latérale précitée, leurs têtes étant tournées vers l'extérieur, une pièce de serage (12) qui se trouve en engagement avec la surface supérieure de l'outil (9) et est fixée, avec possibilité de détachement, à l'aide d'un boulon vertical (13), et un outil (9) qui peut être serré entre la surface supérieure en forme de V (11) d'une partie incurvée, s'étendant vers l'avant, de l'appui (3) et une partie s'étendant vers l'avant de la pièce de serrage (12), le côté postérieur de la pièce de serrage (12) se trouvant contre une face d'arrêt (16), l'outil (9) présentant un bord de coupe (8) qui suit une direction perpendiculaire à celle de l'axe longitudinal du support (1) et qui est d'une longueur telle que le bord de coupe précité (8) s'avance dans ce sens perpendiculaire au-delà des côtés des parties s'étendant vers l'avant de la pièce de serrage (12) et de l'appui (3), la surface externe incurvée (6) de la partie incurvée s'étendant vers l'avant de l'appui s'étendant dans le sens axial du support (1) sur une longueur qui est au moins égale à la longueur axiale de l'outil (9), cette surface externe incurvée (6) ayant un axe qui se trouve dans un plan passant par le bord de coupe (8) et parallèle à l'axe longitudinal du support (1), alors que la face latérale du support (1) contre laquelle l'appui a été fixé se trouve dans un plan vertical passant par le bord inférieur (18) de la surface externe incurvée (6) de l'appui (3) ou se trouvant à l'intérieur de ce bord inférieur (18), le côté inférieur (19, 20) du support se trouvant à l'intérieur de la surface cylindrique définie par la surface externe incurvée (6) de l'appui (3), le porte-outil étant caractérisé en ce que la pièce de serrage (12) est fixée au support (1), en ce que la partie qui s'étend vers l'avant de la pièce de serrage (12) est déplacée, c'est à dire décalée, latéralement par rapport au boulon (13) qui maintient la pièce de serrage sur le support, en ce que la surface externe incurvée (6) de l'appui (3) s'étend sur toute la longueur axiale de l'appui (3), et en ce que la pièce de serrage (12) présente sur toute sa longueur axiale une surface latérale externe (22) qui est d'une incurvation formant une continuation de l'incurvation de la surface externe incurvée (6) de l'appui (3).

EP 0 192 281 B1

fig-1

fig-2

fig-3

fig-4

1